# EUROPEAN PATENT SPECIFICATION

(11) **EP 0 432 654 B1**
(45) Date of publication and mention of the grant of the patent: **10.07.1996**
(21) Application number: 90123508.5
(22) Date of filing: 07.12.1990
(51) Int. Cl.: C09K 3/16, H01B 1/12, G03C 1/89

(54) **Antistatic layer**
Antistatische Schicht
Couche antistatique

(30) Priority: 11.12.1989 JP 319770/89
(43) Date of publication of application: 19.06.1991
(73) Proprietor: KONICA CORPORATION, Tokyo 163 (JP)
(72) Inventor: Tachibana, Noriki, Hino-shi, Tokyo (JP); Saito, Yoichi, Hino-shi, Tokyo (JP)
(74) Representative: Türk, Gille, Hrabal, Leifert

(56) References cited:
- US-A- 3 507 837
- US-A- 3 997 701
- US-A- 4 192 683
- US-A- 4 225 665
- US-A- 4 302 505
- RESEARCH DISCLOSURE. no. 195, July 1980, HAVANT GB pages 301-310; ANONYMOUS: "Photographic applications of latices"

## Description

### BACKGROUND OF THE INVENTION

This invention relates to an antistatic layer for a plastic film, particularly to a light-sensitive silver halide photographic material excellent in antistatic ability.

Generally speaking, plastic films have strong chargeability, which gives many restrictions in uses in many examples. For example, in light-sensitive silver halide photographic materials, supports such as polyethylene terephthalate have been generally used, which are liable to be charged particularly at lower humidity during winter season. In recent days, when high sensitivity photographic emulsions are coated at high speed, or light-sensitive materials of high sensitivity are subjected to exposure treatment through an automatic printer, antistatic countermeasures are particularly important.

When a light-sensitive material is charged, static marks may appear by its discharging, or a foreign matter such as dust may be attached, whereby pinholes may be generated to deteriorate quality markedly and workability is lowered extremely for correction thereof. For this reason, surfactants or polymeric compounds containing polyethylene oxide groups, polymers containing sulfonic acid or phosphoric acid groups in the molecule have been employed.

Particularly, chargeability control with a fluorine-containing surfactant or conductivity improvement with a conductive polymer has been frequently used and, for example, in Japanese Unexamined Patent Publications No. 91165/1974 and No. 121523/1974, examples of applying an ion type polymer having dissociable group in the polymer main chain are disclosed.

However, in these prior art techniques, the antistatic ability will be deteriorated to a great extent by developing processing. This may be considered to be due to the fact that the antistatic ability is lost via the steps such as the developing step using an alkali, the acidic fixing step and the step of washing. Therefore, in the case when printing is conducted by further using a treated film as in a printing light-sensitive material, the problems such as pinhole generation by attachment of dust will ensue. For this reason, for example, in Japanese Unexamined Patent Publications No. 84658/1980 corresponding to US-A-4 225 665 and No. 174542/1986, antistatic layers comprising a water-soluble conductive polymer having carboxyl groups, a hydrophobic polymer having carboxyl groups and a polyfunctional aziridine have been proposed. According to this method, antistatic ability can remain after the treatment, but since transparency of the coated film depends greatly on the drying speed, there was involved the drawback that transparency was lowered to a level which could not stand use at all when drying was effected quickly for improvement of production efficiency, even though it might be transparent when drying was effected slowly.

US-A-3,997,701 discloses antistatic polyester films suitable for montage printing processes which are made by coating the polyester film during or after orientation with an antistatic composition comprising lithium nitrate and polymeric binder, such as an acrylic copolymer.

US-A-4,302,505 discloses a polyester film coated with an antistatic coating which includes a polyester film support coated on at least one side with a latex coating.

US-A-4,192,683 discloses a photographic light-sensitive material comprising a layer which contains a sulfonic acid salt compound.

### SUMMARY OF THE INVENTION

To cope with the problems as described above, an object of the present invention is to provide an antistatic layer for a plastic film excellent in transparency without haze even when dried quickly, and also without deterioration of antistatic ability after processing such as developing processing, and another object of the present invention is to provide a light-sensitive silver halide photographic material excellent in antistatic ability.

The above objects of the present invention can be accomplished by an antistatic layer for a plastic film comprising a reaction product of
a) at least one kind of water-soluble conductive polymer containing recurring units of styrenesulfonic acid groups in an amount of 5% by weight or more per molecule of the polymer, and having a number average molecular weight of 3,000 to 100,000, which water-soluble conductive polymer optionally can contain at least one further conductive group selected from the group consisting of sulfonic acid groups, sulfuric acid ester groups, quaternary ammonium salts, tertiary ammonium salts and carboxyl group, and which water-soluble conductive polymer optionally can have further at least one group selected from the group consisting of hydroxy group, amino group, epoxy group, aziridine group, active methylene group, sulfinic acid group, aldehyde group and vinylsulfone group,
b) at least one kind of hydrophobic polymer represented by the formula (I): 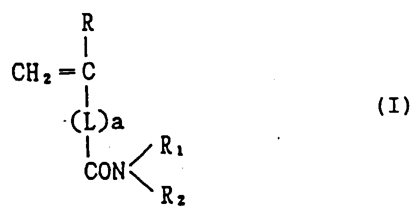 wherein R represents a hydrogen atom or an alkyl group having 1 to 4 carbon atoms; L represents a divalent group; a represents 0 or 1; and R₁ and R₂ each represent a hydrogen atom or an alkyl group having 1 to 6 carbon atoms, and
c) a curing agent, wherein the ratio of a) : b) : c) is 50 to 95 : 5 to 45 : 1 to 45 in terms of % by weight.

### DESCRIPTION OF THE PREFERRED EMBODIMENTS

In the following, the present invention is explained in more detail.

In the water-soluble conductive polymer of the present invention, recurring units of styrenesulfonic acid are required to be contained. The styrenesulfonic acid groups are required to be 5 % by weight or more per one molecule of the polymer. In the water-soluble conductive polymer, at least one of a hydroxy group, an amino group, an epoxy group, an aziridine group, an active methylene group, a sulfinic acid group, an aldehyde group and a vinylsulfone group may be contained.

The conductive polymer can be obtained by sulfonation of polystyrene derivatives or polymerization of styrenesulfonic acids.

The polymer has a molecular weight (Mn) of 3,000 to 100,000, preferably 3,500 to 50,000.

In the following, exemplary compounds of the water-soluble conductive polymers to be used in the present invention are set forth, but the present invention is not limited by these examples at all.

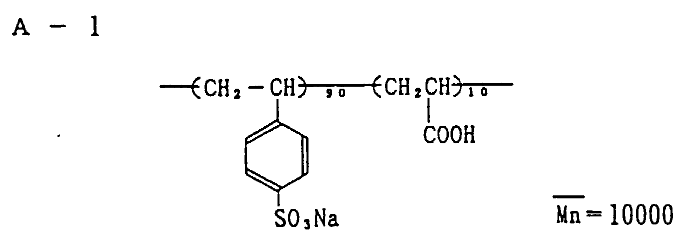

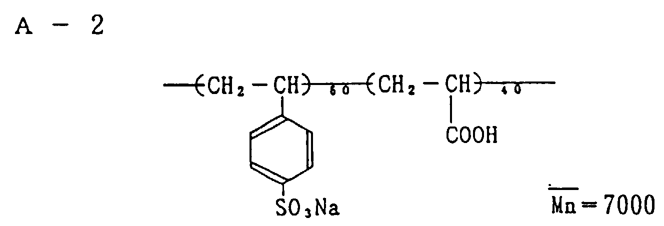

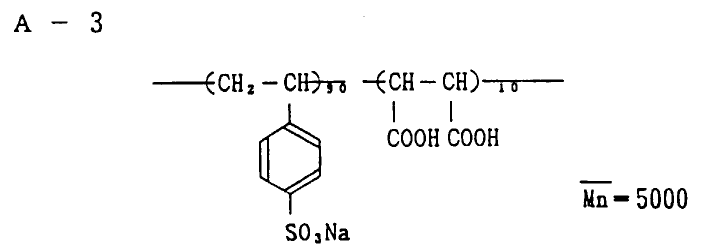

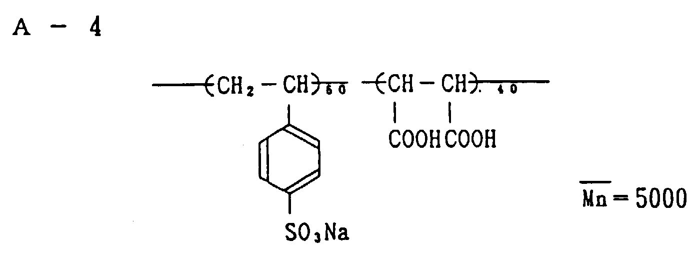

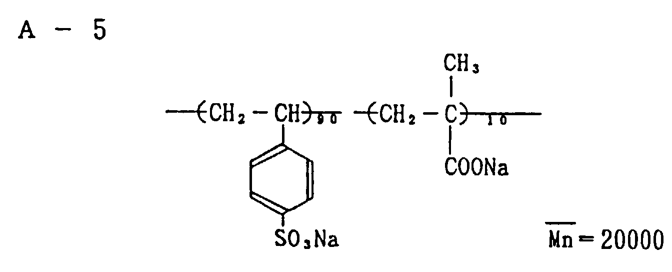

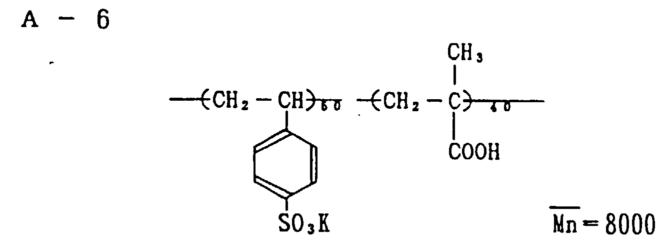

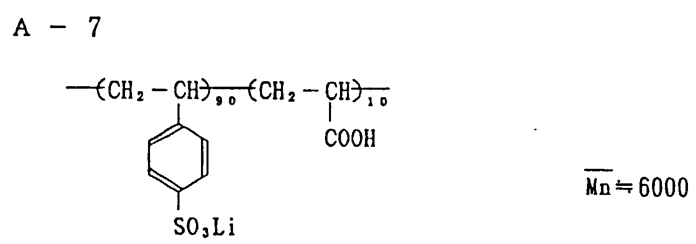

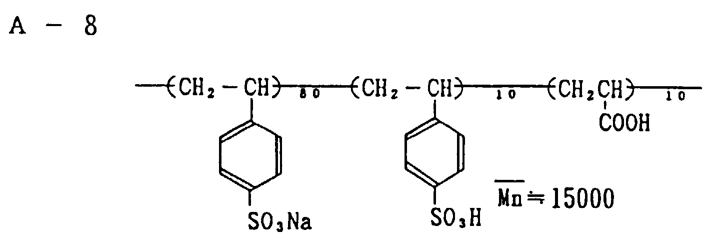

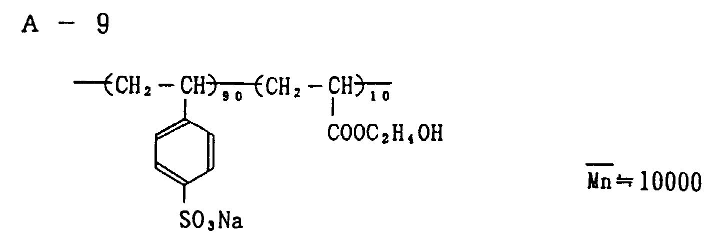

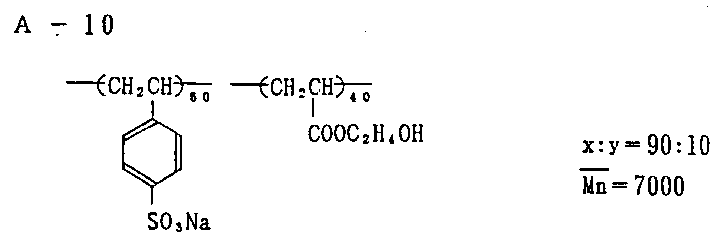

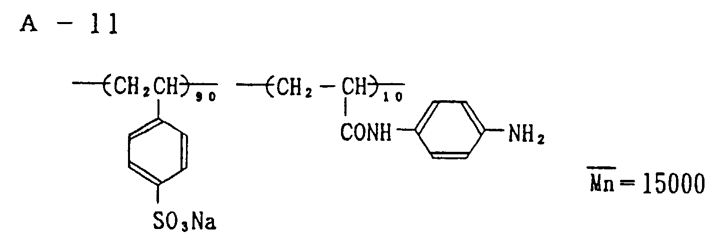

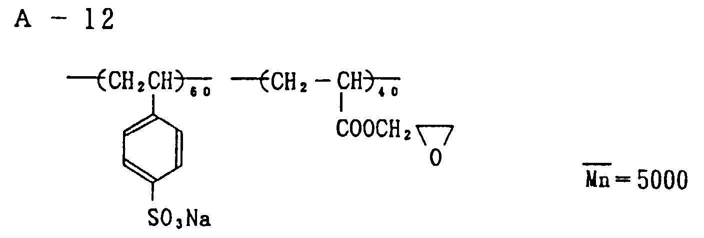

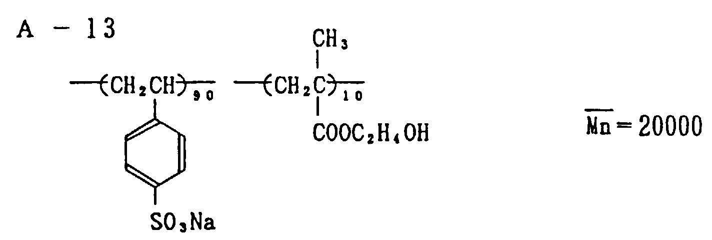

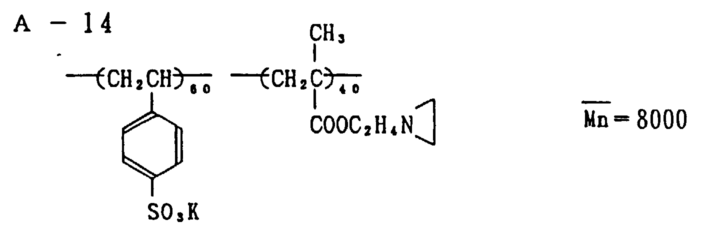

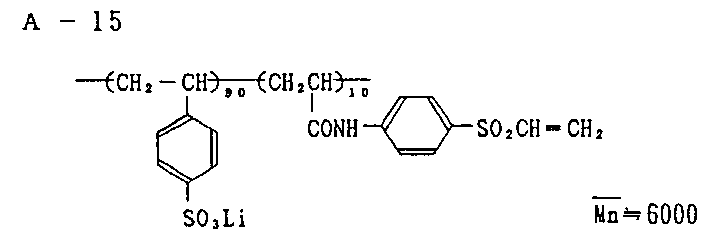

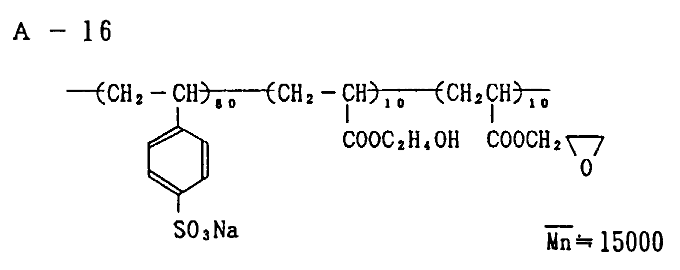

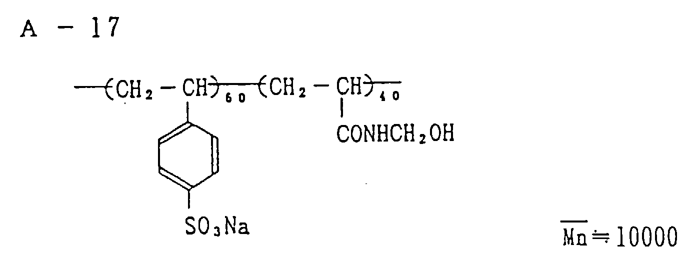

In the above formulae A-1 to A-17, Mn represents an average molecular weight (in the present specification, average molecular weight refers to number average molecular weight), which is a measured value according to GPC represented by polyethylene glycol.

The hydrophobic polymer particles to be contained in the water-soluble conductive polymer layer of the present invention are composed of the so-called latex substantially insoluble in water. The hydrophobic polymer can be obtained by polymerization of monomers according to any desired combination selected from among styrene, styrene derivatives, alkyl acrylates, alkyl methacrylates, olefin derivatives, halogenated ethylene derivatives, vinyl ester derivatives and acrylonitrile. Particularly, those containing 30 mole % or more of styrene derivatives, alkyl acrylates and alkyl methacrylates are preferred, particularly preferably 50 mole % or more.

As the monomer having an amide group to be contained in the latex of the present invention, at least one kind of those represented by the following formula (I) are preferred. 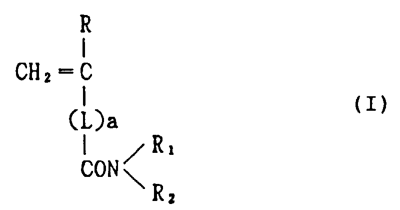 wherein R represents a hydrogen atom, a lower alkyl group having 1 to 4 carbon atoms; L represents a divalent group; a represents 0 or 1; and R₁ and R₂ each represent a hydrogen atom or a lower alkyl group having 1 to 6 carbon atoms.

In the following, specific examples of the monomer of the present invention are enumerated.

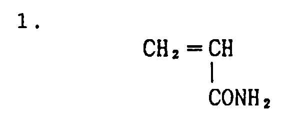

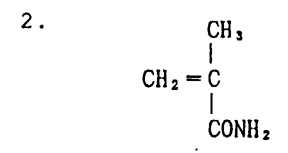

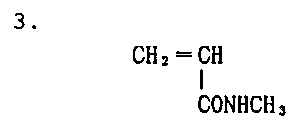

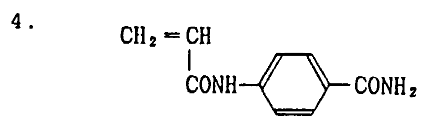

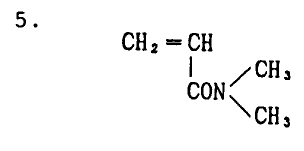

For making the hydrophobic polymer into the form of a latex, there are two methods, one of which is performing emulsion polymerization and the other is dissolving the polymer in solid state into a low boiling point solvent to be finely dispersed therein, followed by evaporation of the solvent, but the emulsion polymerization method is preferred in the points of fine particle size, and yet with regular sizes.

The molecular weight of the hydrophobic polymer may be 3,000 or higher, and there is no substantial difference in transparency depending on the molecular weight.

Specific examples of the hydrophobic polymer of the present invention are shown below.

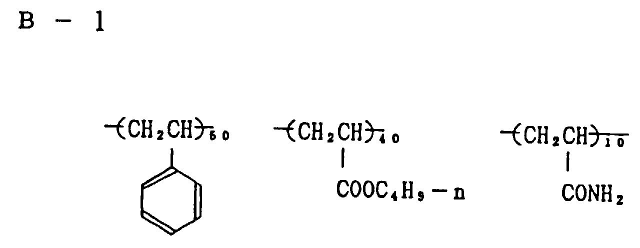

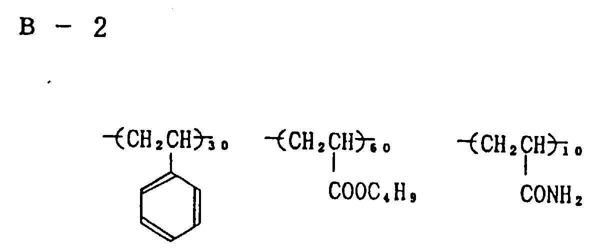

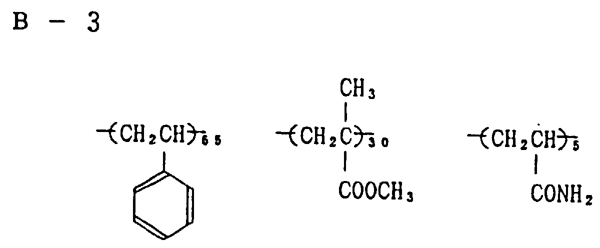

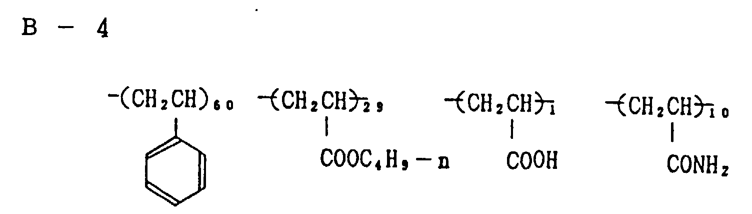

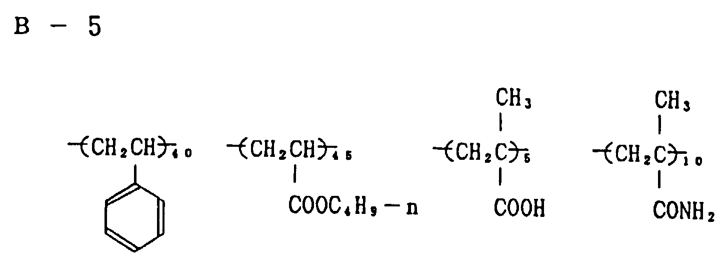

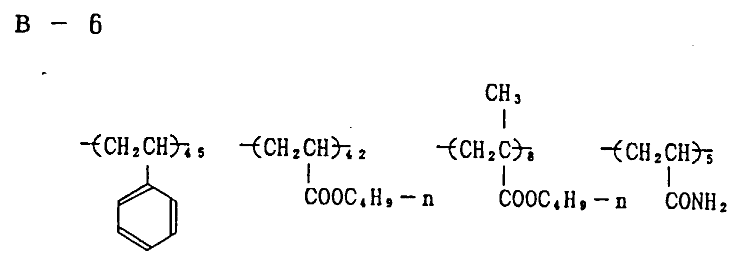

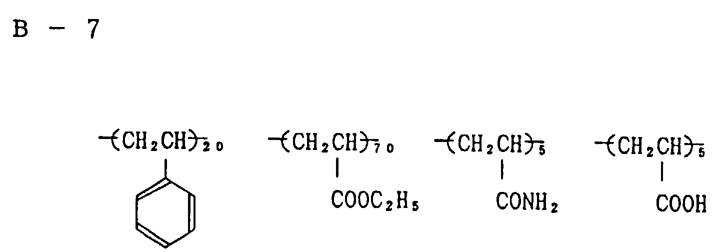

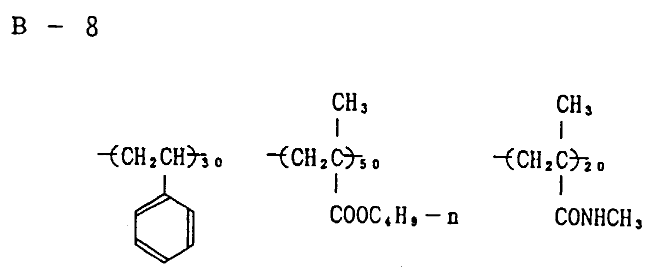

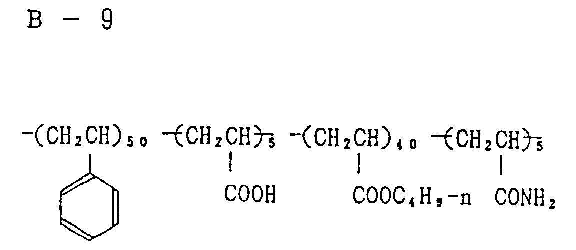

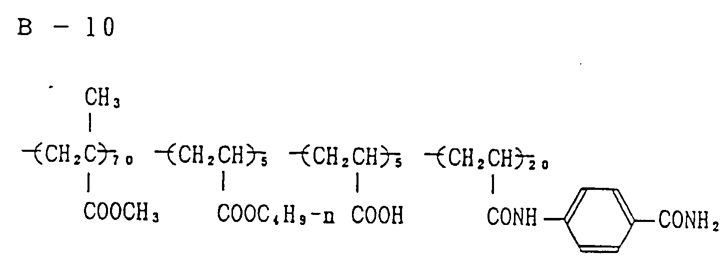

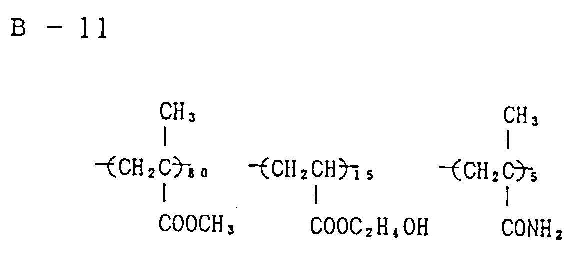

In the present invention, a constitutional ratio of the water-soluble conductive polymer, the hydrophobic polymer particle and the curing agent is in terms of % by weight, 50 to 95 : 5 to 45 : 1 to 45, preferably 60 to 90 : 10 to 40 : 5 to 30.

The water-soluble conductive polyer is contained in the antistatic layer preferably in an amount of 0.01 to 10 g/m², more preferably 0.5 to 2.5 g/m².

A coated film thickness of the antistatic layer according to the present invention is in dried state 0.4 to 2.5 µm, particularly preferably 0.5 to 2.0 µm. If it is less than 0.4 µm, sufficient conductivity cannot be obtained after developing processig, while when attempting to make the film more than 2.5 µm, coating processing is extremely difficult and a coated film having good surface smoothness cannot be obtained.

In the present invention, a pH of the surface of the coated antistatic layer after drying is preferably made 8.5 or less. As the method therefor, it is preferred to use and coat an aqueous processing solution to which an acid or a salt is added. As the salt, preferred are those of a strong acid and a weak base such as ammonium sulfate, ammonium phosphate, ammonium hydrogen phosphate, ammonium dihydrogen phosphate, ammonium chloride, ammonium lactate and ammonium citrate. As the weak base, ammonia is particularly preferred.

The amount of the salt to be added is preferably 0.1 to 20 % by weight, more preferably 1 to 10 % by weight, based on the conductive polymer.

The pH of the film surface is preferably 8.0 or less, but too low pH value is not preferred in the point of stability of the film. The pH of 3.0 to 7.5 is particularly preferred.

The curing agent for curing the conductive layer of the present invention may be preferably a polyfunctional aziridine compound. The aziridine compound may be preferably bifunctional or trifunctional, with a molecular weight of 7,000 or lower.

The conductive layer of the present invention may be on the support side relative to the light-sensitive layer, or on the side opposite to the light-sensitive layer of the support, namely the back surface.

In the present invention, the conductive layer is provided on a transparent support by coating. As the transparent support, all supports for photography can be used, but preferably polyethylene terephthalate or cellulose triacetate prepared so as to transmit 90 % or more of visible light.

These transparent supports can be prepared by the methods well known to those skilled in the art, but in some cases, a dye may be slightly added to give slight blue tint substantially without interfering with light transmission.

The support of the present invention may also have a subbing layer containing a latex polymer provided by coating after corona discharging treatment. The corona discharging treatment may be applied particularly preferably at 1 mW to 1 KW/m²·min as the energy value. Also, particularly preferably, corona discharging treatment is effected again before coating of the conductive layer after coating of the latex subbing layer.

The present invention can be applied to substantially all light-sensitive materials formed on supports. For example, they are light-sensitive silver halide color materials, light-sensitive materials for roentgenogram and light-sensitive materials for printing plates.

The silver halide emulsion to be used in the present invention can be stabilized by using the compounds as disclosed in U.S. Patents No. 2,444,607, No. 2,716,062 and No. 3,512,982, West German Patent Publications No. 1,189,380, No. 2,058,626 and No. 2,118,411, Japanese Patent Publication No. 4133/1968, U.S. Patent No. 3,342,596, Japanese Patent Publication No. 4417/1972, West German Patent Publication No. 2,149,789, Japanese Patent Publications No. 2825/1964 and No. 13566/1974, preferably, for example, 5,6-trimethylene-7-hydroxy-S-triazolo(1,5-a)-pyrimidine, 5,6-tetramethylene-7-hydroxy-S-triazolo(1,5-a)pyrimidine, 5-methyl-7-hydroxy-S-triazolo(1,5-a)pyrimidine, 7-hydroxy-S-triazolo(1,5-a)pyrimidine, 5-methyl-6-bromo-7-hydroxy-S-triazolo(1,5-a)pyrimidine, gallic acid esters (e.g. isoamyl gallate, dodecyl gallate, propyl gallate and sodium gallate), mercaptans (l-phenyl-5-mercaptotetrazole and 2-mercaptobenzthiazole), benzotri-azoles (5-bromobenzotriazole, 5-methylbenzotriazole) and benzimidazoles (6-nitrobenzimidazole).

In the light-sensitive silver halide photographic material according to the present invention and/or the developing solution, an amino compound can be contained.

For enhancing developability, a developing agent such as phenidone or hydroquinone, or an inhibitor such as benzotriazole can be contained on the emulsion side. Alternatively, for enhancing the processing ability of the processing solution, a developing agent or an inhibitor can be contained in the backing layer.

The hydrophilic colloid to be used particularly advantageously in the prevent invention is gelatin.

The gelatin to be used in the present invention may include both of alkali treated and acid treated gelatins. However, when osscein gelatin is used, it is preferred to remove calcium or iron. The content of calcium may be preferably 1 to 999 ppm, more preferably 1 to 500 ppm, and the content of iron may be preferably 0.01 to 50 ppm, more preferably 0.1 to 10 ppm. A method for thus controlling the amount of calcium or iron can be accomplished by passing an aqueous gelatin solution through an ion exchange device.

The developing agent to be used for development of the light-sensitive silver halide photographic material according to the present invention may include catechol, pyrogallol and derivatives thereof, and ascorbic acid, chlorohydroquinone, bromohydroquinone, methylhydroquinone, 2,3-dibromohydroquinone, 2,5-diethylhydroquinone, 4-chlorocatechol, 4-phenyl-catechol, 3-methoxy-catechol, 4-acetyl-pyrogallol and sodium ascorbate.

Also, HO-(CH=CH)ₙ-NH₂ type developer may typically include o- and p-aminophenols, and specifically includes 4-aminophenol, 2-amino-6-phenylphenol, 2-amino-4-chloro-6-phenylphenol and N-methyl-p-aminophenol.

Further, examples of H₂N-(CH=CH)ₙ-NH₂ type developer may include 4-amino-2-methyl-N,N-diethylaniline, 2,4-diamino-N,N-diethylaniline, N-(4-amino-3-methylphenyl)-morpholine and p-phenylenediamine.

Heterocyclic type developer may include 3-pyrazolidones such as 1-phenyl-3-pyrazolidone, 1-phenyl-4,4-dimethyl-3-pyrazolidone and 1-phenyl-4-methyl-4-hydroxymethyl-3-pyrazolidone, abd 1-phenyl-4-amino-5-pyrazolone and 5-aminouracil. In

the present invention, there may be effectively used the developers as described in T.H. James, "The Theory of the Photographic Process", Fourth Edition, pp. 291 - 334 and Journal of the American Chemical Society, Vol. 73, p. 3,100 (1951). These developers can be used either singly or in combination of two or more kinds, but preferably in combination of two or more kinds. Also, in the developing solution to be used for development of the light-sensitive material according to the present invention, for example, sulfites such as sodium sulfite and potassium sulfite can be used as the preservative without impairing the effect of the present invention. Also, as the preservative, hydroxylamine and hydrazide compounds can be used, and in this case, the amount of such compounds used may be preferably 5 to 500 g, more preferably 20 to 200 g per liter of the developing solution.

Also, in the developing solution, glycols may be contained as the organic solvent, and examples of such glycols may include ethylene glycol, diethylene glycol, propylene glycol, triethylene glycol, 1,4-butanediol and 1,5-pentanediol, but diethylene glycol may be preferably used. The amount of these glycols used may be preferably 5 to 500 g, more preferably 20 to 200 g per liter of the developing solution. These organic solvents can be used either alone or in combination.

The light-sensitive silver halide photographic material according to the present invention can give a light-sensitive material extremely excellent in storage stability by performing development processing by use of a developing solution containing a developing inhibitor as described above.

The pH value of the developing solution comprising the above composition may be preferably 9 to 13, but the pH value in the range of 10 to 12 is more preferred in preservability and photographic characteristics. As for the cations in the developing solution, a developer with higher potassium ion ratio than sodium ion is preferred for enhancing the activity of the developing solution.

The light-sensitive silver halide photographic material according to the present invention can be processed according to various conditions. The processing temperature may be preferably a developing temperature of 50 °C or lower, particularly preferably around 25 °C to 40 °C, and the development is generally accomplished within 2 minutes, particularly preferably from 10 seconds to 50 seconds to bring about preferred effects in many cases. Also, other processing steps than developing, for example, washing, stopping, stabilizing and fixing, further, if necessary, pre-film hardening and neutralization can be employed as desired, and these can be also omitted suitably. Further, these treatments may be also the so-called manual development processing such as dish development and frame development, or mechanical development such as roller developing and hanger development.

The present invention is described in detail by referring to Examples. As a matter of course, the present invention is not limited by Examples as described below at all.

### Example 1

On a polyethylene terephthalate support applied to subbing treatment after corona discharging, followed further by corona discharging were coated an antistatic solution having the composition shown below while adding a hardener (H-1) shown below so as to become 10 mℓ/m² by using an air knife coater at a speed of 50 m/min.

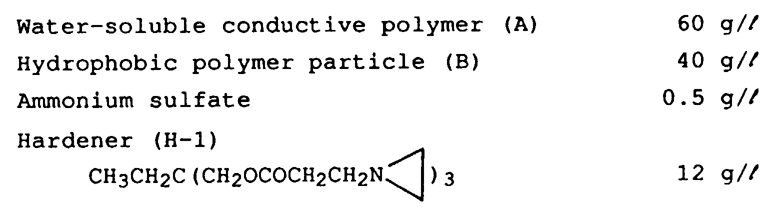

The solution having the above composition was made 1 liter.

H-1 was added while coating.

The coating was dried under the parallel stream conditions of a drying air temperature of 90 °C, an overall heat transfer coefficient of 25 Kg/m²·hr·°C for 30 seconds, followed further by heat treatment at 140 °C for 90 seconds. On the antistatic layer, gelatin was coated to 2.0 g/m², and dried, followed by haze test. As the hardener of gelatin, the (H-2) shown below was employed.

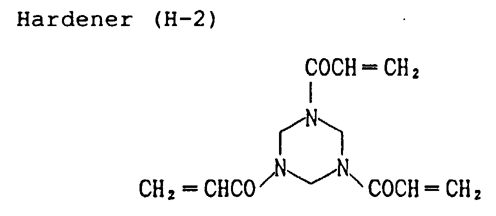

### Haze test

By means of a turbidimeter Model T-2600 DA manufactured by Tokyo Denshoku K.K., the film support was measured and the transmittance was represented in %.

The results are shown in Table 1.

**Table 1**

| | (A) | (B) | Transmittance (%) |
|---|---|---|---|
| This invention | 4 | 1 | 96 |
| This invention | 4 | 5 | 96 |
| This invention | 4 | 6 | 96 |
| This invention | 13 | 5 | 95 |
| This invention | 25 | 6 | 93 |
| Comparative | 4 | (a) | 80 |

Formula (a) 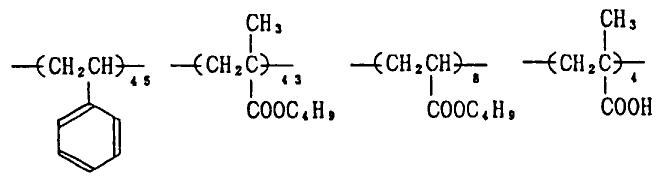 Compound disclosed in Japanese Unexamined Patent Publication No. 84658/1980

From the results in Table 1, it can be understood that the samples of the present invention are excellent in haze.

### Example 2

Under acidic atmosphere of pH 3.0, particles containing 10⁻⁵ mole of rhodium per one mole of silver were prepared according to the control double jet method. The particles were grown in a system containing 30 mg of benzyladenine per one liter of a 1 % aqueous gelatin solution. After mixing of silver and a halide, 600 mg of 6-methyl-4-hydroxy-1,3,3a,7-tetrazaindene was added per 1 mole of silver halide, followed by washing and desalting.

Subsequently, 60 mg of 6-methyl-4-hydroxy-1,3,3a,7-tetrazaindene was added per one mole of silver halide, followed by sulfur sensitization. After sulfur sensitization, 6-methyl-4-hydroxy-1,3,3a,7-tetrazaindene was added as a stabilizer.

### (Silver halide emulsion layer)

To the above respective emulsions, the following additives were added by controlling the attached amounts to those shown below, and each mixture was coated on a polyethylene terephthalate support (thickness: 100 µm) subjected to subbing treatment using poly(styrene-butyl acrylate-glycidyl methacrylate) latex.

| | |
|---|---|
| Latex polymer: styrene - butyl acrylate - acrylic acid terpolymer | 1.0 g/m² |
| Tetraphenylphosphonium chloride | 30 mg/m² |
| Saponin | 200 mg/m² |
| Polyethylene glycol | 100 mg/m² |
| Sodium dodecylbenzenesulfonate | 100 mg/m² |
| Hydroquinone | 200 mg/m² |
| Phenidone | 100 mg/m² |
| Sodium styrenesulfonate-maleic acid copolymer (Mw = 250,000) | 200 mg/m² |
| Butyl gallate | 500 mg/m² |
| Hydrazine compound shown below | 20 mg/m² |
| 5-Methylbenzotriazole | 30 mg/m² |
| 2-Mercaptobenzimidazole-5-sulfonic acid | 30 mg/m² |
| Inert osscein gelatin (isoelectric point 4.9) | 1.5 g/m² |
| 1-(p-Acetylamidophenyl)-5-mercaptotetrazole | 30 mg/m² |
| Silver quantity | 2.8 g/m² |

Tetrazolium compound

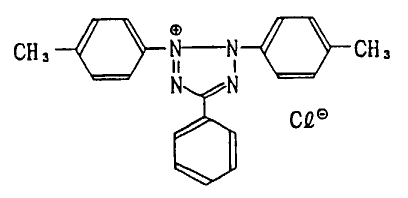

### (Emulsion layer protective film)

As the emulsion layer protective film, the composition was prepared and coated to the attached amounts shown below.

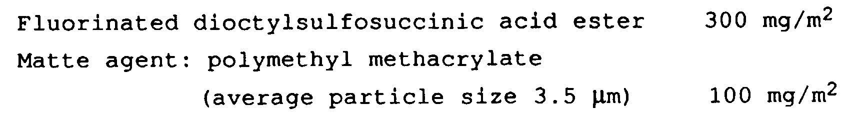

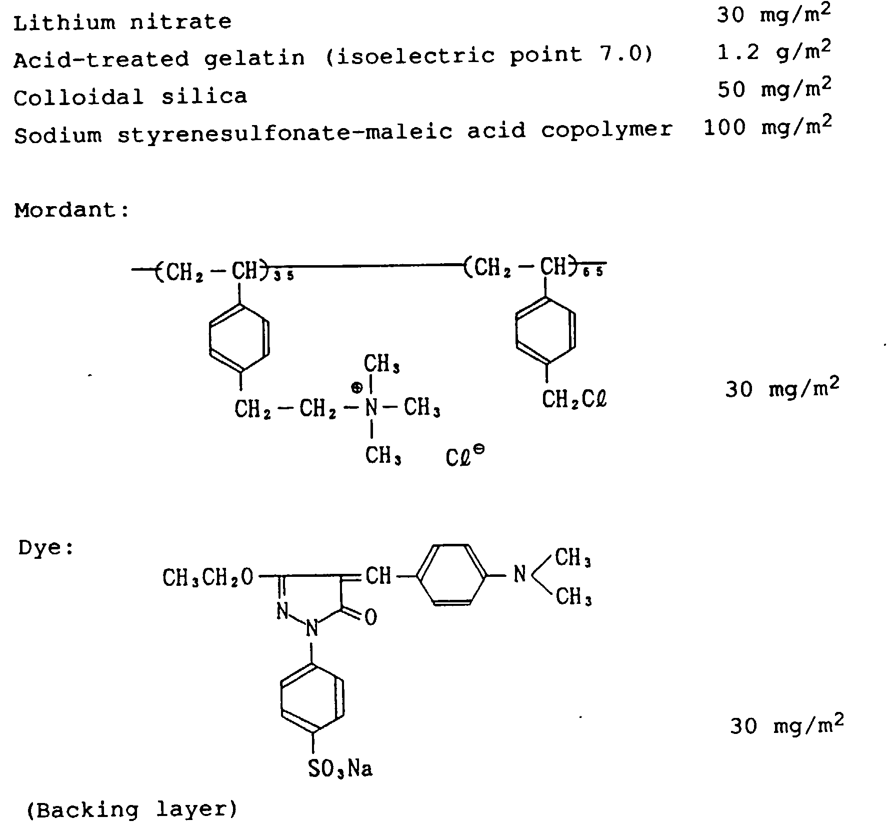

On the support opposite to the emulsion layer, after corona discharging with a power of 30 W/m²·min previously, a poly(styrene-butyl acrylate-glycidyl methacrylate) latex polymer was coated in the presence of a hexamethyleneaziridine hardener, and further the antistatic layer of the present invention was provided by coating thereon over 10 hours in the same manner as in Example 1. Subsequently, a backing layer containing a backing dye having the composition shown below was coated on the layer. The gelatin layer was hardened with glyoxal, 1-oxy-3,5-dichloro-S-triazine sodium salt and the (H-3) shown below which is a hydroxy-containing epoxy compound.

### H-3: Reaction product of polyglycidol and epichlorohydrin

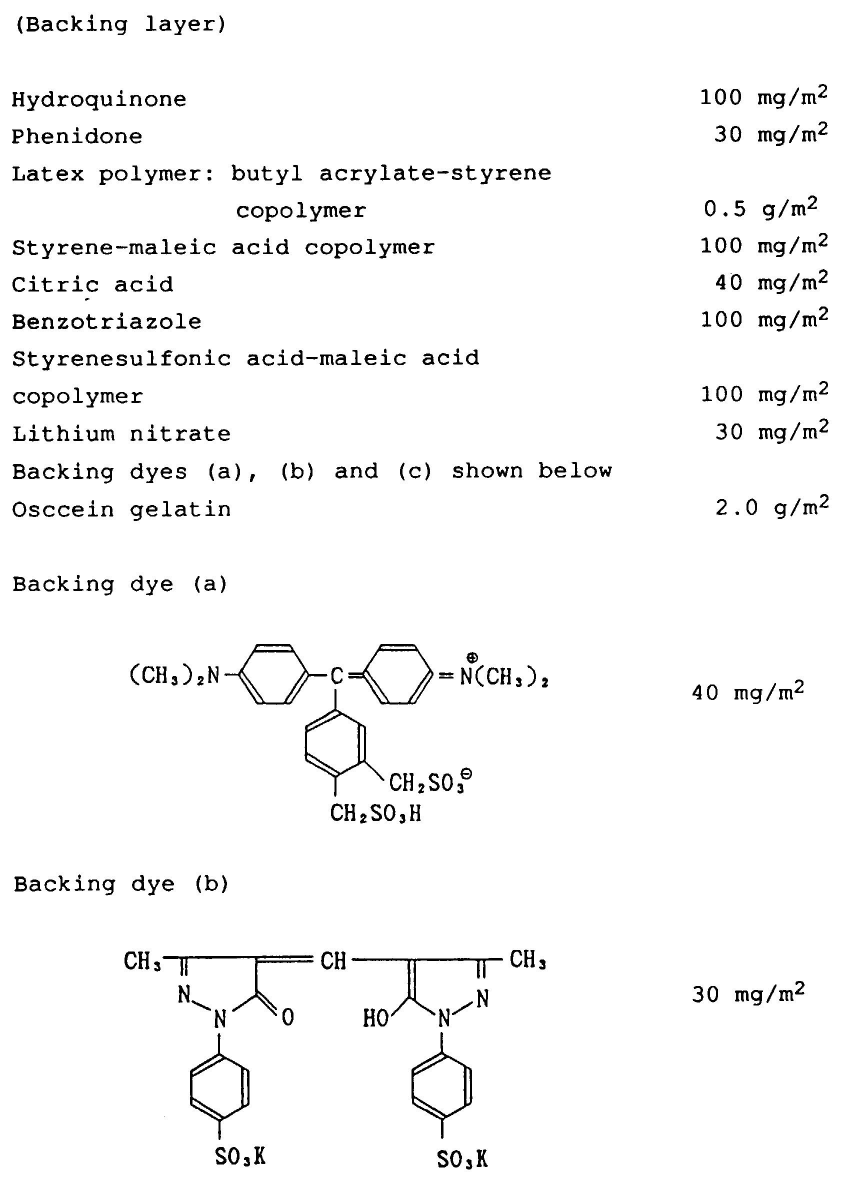

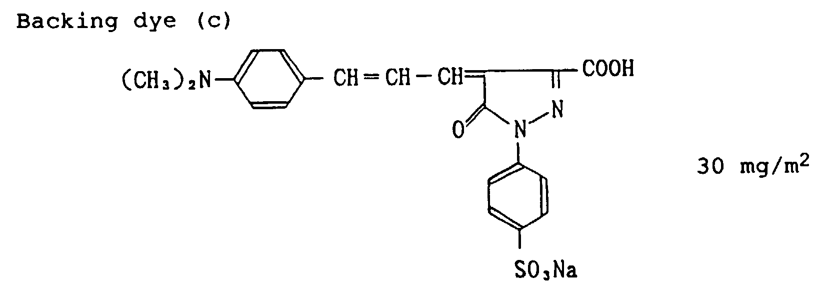

The samples obtained as described above were subjected to whole surface exposure, and developed by using the developing solution and the fixing solution shown below, followed by surface specific resistance test and haze test. The results are shown in Table 2.

### <Developing solution recipe>

| | |
|---|---|
| Hydroquinone | 25 g |
| 1-Phenyl-4,4-dimethyl-3-pyrazolidone | 0.4 g |
| Sodium bromide | 3 g |
| 5-Methylbenzotriazole | 0.3 g |
| 5-Nitroindazole | 0.05 g |
| Diethylaminopropane-1,2-diol | 10 g |
| Potassium sulfite | 90 g |
| Sodium 5-sulfosalicylate | 75 g |
| Sodium ethylenediaminetetraacetate | 2 g |
| (made up to one liter with water, and adjusted to pH 11.5 with caustic soda) | |

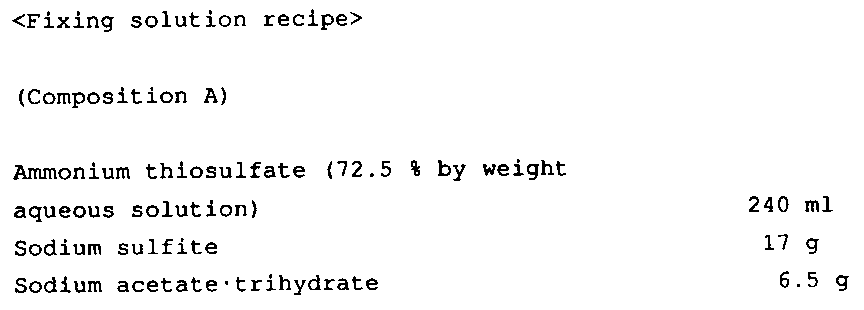

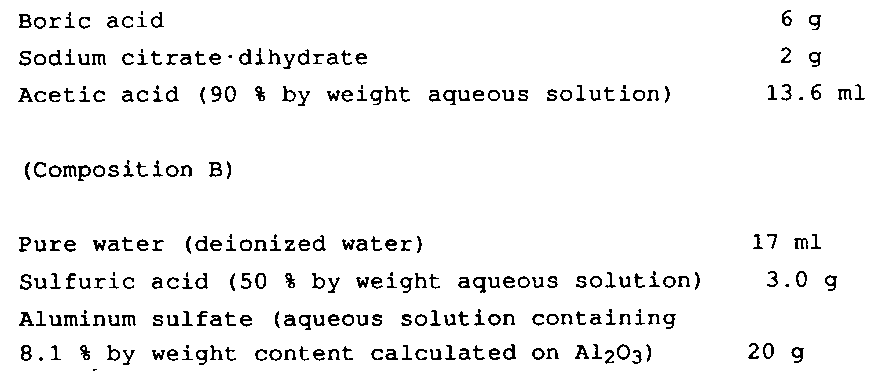

During use of the fixing solution, the above composition A and the composition B were successively dissolved in 500 ml of water in this order, and made up to one liter before use. The fixing solution had a pH of about 5.6.

### <Developing processing conditions>

| (Step) | (Temperature) | (Time) |
|---|---|---|
| Developing | 40 °C | 8 sec |
| Fixing | 35 °C | 8 sec |
| Washing | Normal temperature | 10 sec |

Measurement of surface specific resistance

Measurement was conducted at 23 °C under 55 % RH (relative humidity) by using a teraohmmeter Model VE 30 manufactured by Kawaguchi Denki K.K.

**Table 2**

| | (A) | (B) | Transmittance (%) | Surface specific resistance (Ω) |
|---|---|---|---|---|
| This invention | 4 | 1 | 95 | 5 x 10¹¹ |
| This invention | 4 | 5 | 84 | 6 x 10¹¹ |
| This invention | 4 | 6 | 95 | 5 x 10¹¹ |
| This invention | 13 | 5 | 95 | 5 x 10¹¹ |
| This invention | 25 | 6 | 92 | 5 x 10¹¹ |
| Comparative | 4 | (a) | 78 | 5 x 10¹¹ |

From the results in Table 2, according to the present invention, it can be understood that excellent antistatic ability can be maintained even after developing processing.

Also, when the tetrazolium compound in the emulsion layer was replaced with the hydrazine compound shown below, the same effect could be obtained.

### Hydrazine compound:

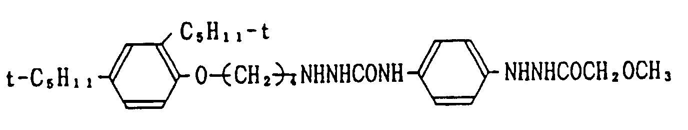

According to the present invention, an excellent antistatic layer of a light-sensitive silver halide photographic material excellent in transparency after coating could be obtained without any deterioration of antistatic ability even after developing processing.

## Claims

1. An antistatic layer for a plastic film comprising a reaction product of
a) at least one kind of water-soluble conductive polymer containing recurring units of styrenesulfonic acid groups in an amount of 5% by weight or more per molecule of the polymer, and having a number average molecular weight of 3,000 to 100,000, which water-soluble conductive polymer optionally can contain at least one further conductive group selected from the group consisting of sulfonic acid groups, sulfuric acid ester groups, quaternary ammonium salts, tertiary ammonium salts and carboxyl group, and which water-soluble conductive polymer optionally can have further at least one group selected from the group consisting of hydroxy group, amino group, epoxy group, aziridine group, active methylene group, sulfinic acid group, aldehyde group and vinylsulfone group,
b) at least one kind of hydrophobic polymer represented by the formula (I): 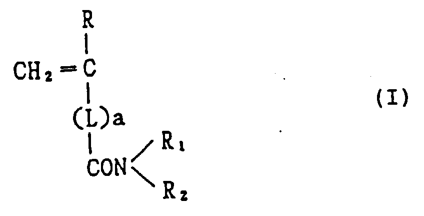 wherein R represents a hydrogen atom or an alkyl group having 1 to 4 carbon atoms; L represents a divalent group; a represents 0 or 1; and R₁ and R₂ each represent a hydrogen atom or an alkyl group having 1 to 6 carbon atoms, and
c) a curing agent, wherein the ratio of a) : b) : c) is 50 to 95 : 5 to 45 : 1 to 45 in terms of % by weight.

2. The antistatic layer according to Claim 1, wherein the water-soluble conductive polymer has at least one group selected from the group consisting of hydroxy group, amino group, epoxy group, aziridine group, active methylene group, sulfinic acid group, aldehyde group and vinylsulfone group in an amount of 5 % by weight or more per one molecule of the water-soluble conductive polymer.

3. The antistatic layer according to Claims 1 and 2, wherein said molecular weight is 3,500 to 50,000.

4. The antistatic layer according to Claims 1 to 3, wherein the water-soluble conductive polymer is contained in the antistatic layer in an amount of 0.01 g/m² to 10 g/m².

5. The antistatic layer according to Claim 4, wherein the water-soluble conductive polymer is contained in the antistatic layer in an amount of 0.5 g/m² to 2.5 g/m².

6. The antistatic layer according to Claims 1 to 5, wherein the hydrophobic polymer further comprises at least one monomer unit selected from the group derived from styrene, styrene derivatives, alkyl acrylates, alkyl methacrylates, olefin derivatives, halogenated ethylene derivatives, acrylamide derivatives, methacrylamide derivatives, vinyl ester derivatives and acrylonitrile.

7. The antistatic layer according to Claim 6, wherein the hydrophobic polymer is a polymer containing units derived from styrene derivatives, alkyl acrylates and alkyl methacrylates in an amount of at least 30 mole %.

8. The antistatic layer according to Claim 6, wherein a number average molecular weight of the hydrophobic polymer particles is 3,000 or higher.

9. The antistatic layer according to Claims 1 to 8, wherein the curing agent is a polyfunctional aziridine.

10. The antistatic layer according to Claims 1 to 9, wherein the curing agent is a difunctional or trifunctional aziridine having a molecular weight of 600 or less.

11. The antistatic layer according to Claims 1 to 10, wherein the pH of the layer is 8.5 or less.

## Patentansprüche

1. Antistatische Schicht für einen Kunststofffilm, umfassend ein Reaktionsprodukt aus
a) mindestens einer Art wasserlösliches leitfähiges Polymer, welches wiederkehrende Einheiten aus Styrolsulfonsäuregruppen in einer Menge von 5 Gew.-% oder mehr pro Molekül des Polymeren enthält und ein zahlenmittleres Molekulargewicht von 3000 bis 100000 aufweist, wobei das wasserlösliche leitfähige Polymer gegebenenfalls mindestens eine weitere leitfähige Gruppe enthalten kann, ausgewählt aus der aus Sulfonsäuregruppen, Schwefelsäureestergruppen, quaternären Ammoniumsalzen, tertiären Ammoniumsalzen und Carboxylgruppen bestehenden Gruppe, und wobei das wasserlösliche leitfähige Polymer gegebenenfalls darüber hinaus mindestens eine Gruppe aufweisen kann, ausgewählt aus der Hydroxygruppe, Aminogruppe, Epoxygruppe, Aziridingruppe, aktiver Methylengruppe, Sulfinsäuregruppe, Aldehydgruppe und Vinylsulfongruppe bestehenden Gruppe,
b) mindestens einer Art hydrophobes Polymer, dargestellt durch die Formel (I): 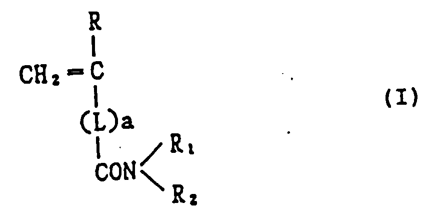 wobei R ein Wasserstoffatom oder eine Alkylgruppe mit 1 bis 4 Kohlenstoffatomen darstellt; L eine divalente Gruppe darstellt; a 0 oder 1 darstellt; und R₁ und R₂ jeweils ein Wasserstoffatom oder eine Alkylgruppe mit 1 bis 6 Kohlenstoffatomen darstellen, und
c) einem Härtungsmittel, wobei das Verhältnis von a) : b) : c) 50 bis 95 : 5 bis 45 : 1 bis 45 ausgedrückt als Gewichtsprozent beträgt.

2. Antistatische Schicht entsprechend Anspruch 1, wobei das wasserlösliche leitfähige Polymer mindestens eine Gruppe aufweist, ausgewählt aus der aus Hydroxygruppe, Aminogruppe, Epoxygruppe, Aziridingruppe, aktiver Methylengruppe, Sulfinsäuregruppe, Aldehydgruppe und Vinylsulfongruppe bestehenden Gruppe, in einer Menge von 5 Gew.-% oder mehr pro Molekül des wasserlöslichen leitfähigen Polymeren.

3. Antistatische Schicht entsprechend Ansprüchen 1 oder 2, wobei das Molekulargewicht 3500 bis 50000 beträgt.

4. Antistatische Schicht entsprechend Ansprüchen 1 bis 3, wobei das wasserlösliche leitfähige Polymer in der antistatischen Schicht in einer Menge von 0,01 g/m² bis 10 g/m² enthalten ist.

5. Antistatische Schicht entsprechend Anspruch 4, wobei das wasserlösliche leitfähige Polymer in der antistatischen Schicht in einer Menge von 0,5 g/m² bis 2,5 g/m² enthalten ist.

6. Antistatische Schicht entsprechend Ansprüchen 1 bis 5, wobei das hydrophobe Polymer darüber hinaus mindestens eine Monomereinheit umfaßt, ausgewählt aus der von Styrol, Styrolderivaten, Alkylacrylaten, Alkylmethacrylaten, Olefinderivaten, halogenierten Ethylenderivaten, Acrylamidderivaten, Methacrylamidderivaten, Vinylesterderivaten und Acrylnitril abgeleiteten Gruppe.

7. Antistatische Schicht entsprechend Anspruch 6, wobei das hydrophobe Polymer ein Polymer ist, das von Styrolderivaten, Alkylacrylaten und Alkylmethacrylaten abgeleitete Einheiten in einer Menge von mindestens 30 Mol.-% enthält.

8. Antistatische Schicht entsprechend Anspruch 6, wobei das zahlenmittlere Molekulargewicht der hydrophoben Polymerpartikel 3000 oder mehr beträgt.

9. Antistatische Schicht entsprechend Ansprüchen 1 bis 8, wobei das Härtungsmittel ein polyfunktionelles Aziridin ist.

10. Antistatische Schicht entsprechend Ansprüchen 1 bis 9, wobei das Härtungsmittel ein difunktionelles oder trifunktionelles Aziridin mit einem Molekulargewicht von 600 oder weniger ist.

11. Antistatische Schicht entsprechend Ansprüchen 1 bis 10, wobei der pH der Schicht 8,5 oder weniger beträgt.

## Revendications

1. Couche antistatique pour film de matière plastique, comprenant un produit de réaction
a) d'au moins un type de polymère conducteur soluble dans l'eau, contenant des motifs récurrents de groupes acide styrènesulfonique, dans une proportion de 5% en poids ou plus, par molécule de polymère, et ayant une masse moléculaire moyenne en nombre de 3 000 à 100 000, ledit polymère conducteur soluble dans l'eau pouvant éventuellement contenir au moins un autre groupe conducteur choisi dans l'ensemble constitué par les groupes acide sulfonique, les groupes ester d'acide sulfurique, les sels d'ammonium quaternaire, les sels d'ammonium tertiaire et le groupe carboxyle, et ledit polymère conducteur soluble dans l'eau pouvant éventuellement contenir aussi au moins un autre groupe choisi dans l'ensemble constitué par un groupe hydroxy, un groupe amino, un groupe époxy, un groupe aziridine, un groupe méthylène actif, un groupe acide sulfinique, un groupe aldéhyde et un groupe vinylsulfone,
b) au moins un type de polymère hydrophobe représenté par la formule (I): 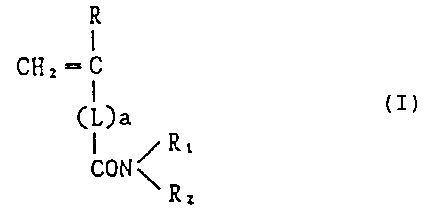 dans laquelle R représente un atome d'hydrogène ou un groupe alkyle comportant 1 à 4 atomes de carbone; L représente un groupe divalent; a représente 0 ou 1; et R₁ et R₂ représentent chacun un atome d'hydrogène ou un groupe alkyle comportant 1 à 6 atomes de carbone, et
c) un agent durcisseur, dans laquelle le rapport a) : b) : c) est de 50 à 95 : 5 à 45 : 1 à 45, exprimé en % en poids.

2. Couche antistatique selon la revendication 1, dans laquelle le polymère conducteur soluble dans l'eau possède au moins un groupe choisi dans l'ensemble constitué par un groupe hydroxy, un groupe amino, un groupe époxy, un groupe aziridine, un groupe méthylène actif, un groupe acide sulfinique, un groupe aldéhyde et un groupe vinylsulfone, dans une proportion de 5% en poids ou plus, par molécule de polymère conducteur soluble dans l'eau.

3. Couche antistatique selon les revendications 1 et 2, dans laquelle ladite masse moléculaire est de 3 500 à 50 000.

4. Couche antistatique selon les revendications 1 à 3, dans laquelle le polymère conducteur soluble dans l'eau est contenu dans la couche antistatique dans une proportion de 0,01 g/m² à 10 g/m².

5. Couche antistatique selon la revendication 4, dans laquelle le polymère conducteur soluble dans l'eau est contenu dans la couche antistatique dans une proportion de 0,5 g/m² à 2,5 g/m².

6. Couche antistatique selon les revendications 1 à 5, dans laquelle le polymère hydrophobe comprend en outre au moins un motif monomère choisi dans l'ensemble dérivé du styrène, des dérivés du styrène, des acrylates d'alkyle, des méthacrylates d'alkyle, des dérivés d'oléfine, des dérivés d'éthylène halogénés, des dérivés d'acrylamide, des dérivés de méthacrylamide, des dérivés d'ester vinylique et d'acrylonitrile.

7. Couche antistatique selon la revendication 6, dans laquelle le polymère hydrophobe est un polymère contenant des motifs dérivés de dérivés du styrène, d'acrylates d'alkyle et de méthacrylates d'alkyle, dans une proportion d'au moins 30% en moles.

8. Couche antistatique selon la revendication 6, dans laquelle une masse moléculaire moyenne en nombre des particules de polymère hydrophobe est de 3 000 ou plus.

9. Couche antistatique selon les revendications 1 à 8, dans laquelle l'agent durcisseur est une aziridine polyfonctionnelle.

10. Couche antistatique selon les revendications 1 à 9, dans laquelle l'agent durcisseur est une aziridine difonctionnelle ou trifonctionnelle ayant une masse moléculaire de 600 ou moins.

11. Couche antistatique selon les revendications 1 à 10, dans laquelle le pH de la couche est de 8,5 ou moins.
